(19) Europäisches Patentamt / European Patent Office / Office européen des brevets

(11) **EP 3 984 913 B1**

(12) **EUROPEAN PATENT SPECIFICATION**

(45) Date of publication and mention of the grant of the patent:
**14.08.2024 Bulletin 2024/33**

(51) International Patent Classification (IPC):
**B65D 85/84** (2006.01)     **C08K 5/00** (2006.01)
**C08L 67/02** (2006.01)     **C08L 77/06** (2006.01)

(21) Application number: **20822529.2**

(22) Date of filing: **04.06.2020**

(52) Cooperative Patent Classification (CPC):
(C-Sets available)
**C08L 67/02; B65D 85/84**     (Cont.)

(86) International application number:
**PCT/JP2020/022095**

(87) International publication number:
**WO 2020/250794 (17.12.2020 Gazette 2020/51)**

(54) **CONTAINER FOR CHLORINE-BASED LIQUID BLEACHING AGENT COMPOSITIONS, AND BLEACHING AGENT ARTICLE**

BEHÄLTER FÜR CHLORBASIERTE FLÜSSIGE BLEICHMITTELZUSAMMENSETZUNGEN UND BLEICHMITTELGEGENSTAND

RÉCIPIENT POUR COMPOSITIONS D'AGENT DE BLANCHIMENT LIQUIDE À BASE DE CHLORE, ET ARTICLE D'AGENT DE BLANCHIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2019 JP 2019108922**

(43) Date of publication of application:
**20.04.2022 Bulletin 2022/16**

(73) Proprietor: **MITSUBISHI GAS CHEMICAL COMPANY, INC.**
**Chiyoda-ku**
**Tokyo 100-8324 (JP)**

(72) Inventors:
• **NAKAMURA, Jin**
  **Hiratsuka-shi, Kanagawa 254-0016 (JP)**
• **MIYABE, Takanori**
  **Hiratsuka-shi, Kanagawa 254-0016 (JP)**
• **ODA, Takafumi**
  **Hiratsuka-shi, Kanagawa 254-0016 (JP)**

(74) Representative: **Vossius & Partner**
**Patentanwälte Rechtsanwälte mbB**
**Siebertstraße 3**
**81675 München (DE)**

(56) References cited:
**WO-A1-2017/150109     WO-A1-2017/150109**
**JP-A- 2003 527 457     JP-A- 2011 132 394**
**JP-A- 2011 132 394     JP-A- 2015 024 828**
**JP-A- 2015 024 828     JP-A- H1 191 757**
**JP-A- H1 191 757**

(52) Cooperative Patent Classification (CPC): (Cont.)

C-Sets
**C08L 67/02, C08L 77/06, C08K 5/0041**

**Description**

**Technical Field**

The present invention relates to a container used for a chlorine-based liquid bleaching agent composition, and a bleaching agent article.

**Background Art**

As containers to accommodate chlorine-based bleaching agents, containers made of polyolefin such as polyethylene are mainly used. This is because since polyolefin has a molecular skeleton composed basically of hydrocarbon and has no moiety high in reactivity in its molecule, the deterioration by alkalis, hypochlorite salts and the like contained in bleaching agents can be prevented.

Further in order to impart decorativeness to the appearance of containers and protect contents from light rays and the like, it has also been studied to add coloring agents to resins of the containers.

For example, Patent Literature 1 discloses a blown container which, in order to color the outer surface of the container and impart the light shielding property, has an inner layer composed of a thermoplastic resin containing an olefin-based resin containing a pigment having the light shielding property, and an outer layer composed of a thermoplastic resin containing a pigment having a hue different from a color of the inner layer.

Further, Patent Literature 2 discloses a colored resin composition which in order to produce molded articles, even being of a single layer, excellent in chlorine-containing water resistance, contains a thermoplastic resin having no acid value, a thermoplastic resin having a specific acid value, and a pigment.

Meanwhile, polyester resins represented by polyethylene terephthalate (PET) have features of being excellent in the appearance such as transparency and glossiness and being excellent also in the mechanical performance, the flavor retention, the gas barrier property and the recyclability. Hence, the polyester resins are utilized broadly for various types of packing materials such as films, sheets and hollow containers. The polyester resins, however, since having ester bonds, in the case of accommodating chlorine-based bleaching agents being alkaline, are liable to be susceptible to hydrolysis and deteriorate in mechanical properties during the long-period storage.

There has been made an attempt of using a polyester resin having excellent properties as described above for containers for chlorine-based bleaching agents. For example, Patent Literature 3 discloses, with the aim of improving the transparency and suppressing cracks, a container for chlorine-based liquid bleaching agent composition, which container is formed from resin composition containing a polyester resin and a specific amount of a specific polyamide resin.

**Citation List**

**Patent Literature**

Patent Literature 1: JP 2003-341748 A
Patent Literature 2: JP H10-310705
Patent Literature 3: International Publication No. WO2017/150109

**Summary of Invention**

**Technical Problem**

In the case where chlorine-based bleaching agents are accommodated in containers composed of a polyester resin as their main base material, not only the mechanical properties deteriorate as described above, but also the color tone in coloration gradually changes and the color of the containers themselves worsens, which are problematic. Another problem is that chlorine being an active component decomposes and the bleaching performance lowers.

Hence, there has been demanded a container which when a bleaching agent is accommodated therein and stored for a long period, retains mechanical properties, in particular, suppresses generation of cracks, and simultaneously is excellent in the appearance being a feature of the polyester resin, can retain the aiming color tone for a long period and can protect contents from deterioration.

The present invention has an object to provide a container used for a chlorine-based liquid bleaching agent composition, which container suppresses generation of cracks during a long-period storage, and simultaneously retains the color tone of the container, and can protect contents, and a bleaching agent article comprising a chlorine-based liquid bleaching agent composition and a container.

**Solution to Problem**

As a result of exhaustive studies in consideration of the above problems, the present inventors have found that the above problems are solved by using, as a container for chlorine-based liquid bleaching agent, a container comprising a resin composition comprising: a polyester resin colored with a pigment, as a main material; and a polyamide resin of a specific proportion with respect to the pigment.

**Advantageous Effects of Invention**

According to the present invention, there can be provided a container used for a chlorine-based liquid bleaching agent composition, which container suppresses generation of cracks during a long-period storage, and simultaneously retains the color tone of the container, and a bleaching agent article comprising a container having a chlorine-based liquid bleaching agent composition accommodated therein.

**Description of Embodiments**

The present invention is the use of a container for a chlorine-based liquid bleaching agent composition, said container comprising a resin composition comprising a polyester resin (A), a pigment (B) and a polyamide resin (C), wherein a content of the polyester resin (A) is 90 to 99 mass%, and a mass ratio [(B)/(C)] of the (B) and the (C) is 1/99 to 20/80, and a bleaching agent article comprising a container having a chlorine-based liquid bleaching agent composition accommodated therein.

Hereinafter, the present invention will be described in detail.

[Container for chlorine-based liquid bleaching agent composition]

The container for chlorine-based liquid bleaching agent composition for use in the present invention (hereinafter, also simply referred to as "container") comprises a resin composition comprising a polyester resin (A), a pigment (B) and a polyamide resin (C), wherein a content of the polyester resin (A) is 90 to 99 mass%, and a mass ratio [(B)/(C)] of the (B) and the (C) is 1/99 to 20/80.

Here, the content of the polyester resin (A) is a content based on 100 mass% of the resin composition.

The container used in the present invention is a container which can suppress generation of cracks during a long-period storage in the state that a chlorine-based liquid bleaching agent composition is accommodated therein, and can simultaneously retain the color tone of the container. The mechanism of action to attain such an effect is unclear, but is presumed as follows.

Although with the aim of improving the decorativeness and the designability of the appearance of containers composed of a polyester resin, and protecting contents, impartation of a color by using a coloring agent such as a dye or a pigment is carried out, the resin is hydrolyzed due to a chlorine-based bleaching agent being alkaline, and additionally, the color may possibly be decomposed due to a hypochlorite salt contained in the chlorine-based bleaching agent, gradually changing the color tone. It is conceivable that in the present invention, the use as the coloring agent of not a dye, which is dissolved in a molecular state in a resin, but a pigment, which is dispersed in a particulate state in the resin and is excellent in light resistance and water resistance, makes it difficult for the coloring agent to be susceptible to the influence of contents. It is also conceivable that by further adding a polyamide resin having amide bonds higher in the polarity than ester bonds in a proper amount with respect to the pigment, the polyamide is adsorbed on the pigment particle surface and coats the pigment. It is conceivable that since polyamide is more unsusceptible to hydrolysis and higher in alkali resistance than polyester, the deterioration of the resin itself, such as cracks, during a long-period storage can be prevented and simultaneously, changes in the color tone can be suppressed and the deterioration of contents can be suppressed.

<Polyester resin (A)>

The polyester resin (A) to be used in the present invention includes copolymers of a dicarboxylic acid and a diol, polymers of a lactone or a hydroxycarboxylic acid, and copolymers of a mixture of these monomers, and the copolymers of a dicarboxylic acid and a diol are preferable.

A preferable polyester resin (A) has a constitutional unit (hereinafter, also referred to as "dicarboxylic acid unit") derived from dicarboxylic acids, and a constitutional unit (hereinafter, also referred to as "diol unit") derived from diols.

The dicarboxylic acid unit contains preferably 80 mol% or more, more preferably 90 mol% or more and still more preferably 95 mol% or more of a constitutional unit derived from terephthalic acid. When the constitutional unit derived from terephthalic acid in the dicarboxylic acid unit is 80 mol% or more, it becomes difficult for a polyester resin to become amorphous, and hence, in the case where a container is fabricated by using the polyester resin, it becomes difficult for the container to thermally shrink and the heat resistance becomes good.

Then, the diol unit contains preferably 80 mol% or more, more preferably 90 mol% or more and still more preferably 95 mol% or more of a constitutional unit derived from ethylene glycol.

That is, it is preferable that the combination of the dicarboxylic acid unit and the diol unit of the polyester resin (A) has a constitutional unit derived from dicarboxylic acids containing 80 mol% or more of the constitutional unit derived from terephthalic acid and a constitutional unit derived from diols containing 80 mol% or more of the constitutional unit derived from ethylene glycol; and it is more preferable that the main component is composed of a polyethylene terephthalate.

The polyester resin (A) may contain constitutional units derived from bifunctional compounds of dicarboxylic acids other than terephthalic acid, diols other than ethylene glycol, and the like.

The dicarboxylic acids other than terephthalic acid include sulfophthalic acid, sulfophthalic acid metal salts and aromatic dicarboxylic acids other than terephthalic acid.

The aromatic dicarboxylic acids other than terephthalic acid are preferably isophthalic acid, orthophthalic acid, naphthalenedicarboxylic acid and 4,4'-biphenyldicarboxylic acid.

The diols other than ethylene glycol are preferably neopentyl glycol and cyclohexane dimethanol.

The polyester resin (A) may further contain constitutional units derived from monofunctional compounds such as monocarboxylic acids and monoalcohols, and may contain constitutional units derived from polyfunctional compounds having at least three ester-forming groups selected from the group consisting of a carboxy group and a hydroxy group.

The polyester resin (A) can be produced by a well-known direct esterification method or transesterification method. As a polycondensation catalyst to be used in production of the polyester resin (A), there can be used an antimony compound, a germanium compound, an aluminum compound or the like.

Further, the polyester resin (A) may contain recycled polyester, and may also be a mixture of two or more kinds of resins.

The intrinsic viscosity of the polyester resin (A) is not especially limited, but is preferably 0.5 to 2.0 dL/g and more preferably 0.6 to 1.5 dL/g. When the intrinsic viscosity is 0.5 dL/g or higher, since the molecular weight of the polyester resin is sufficiently high, the container can develop mechanical properties necessary as a structure.

Here, the intrinsic viscosity is measured by dissolving a polyester resin as a measurement object in a mixed solvent of phenol/1,1,2,2-tetrachloroethane (6/4 in mass ratio) to prepare 0.2, 0.4 and 0.6-g/dL solutions, and by measuring the intrinsic viscosity at 25°C by using an automatic viscometer (Viscotek DSV, manufactured by Malvern Panalytical Co., Ltd.).

In the container used in the present invention, the content of the polyester resin (A) in the resin composition is 90 to 99 mass%, preferably 91 mass% or higher, more preferably 92 mass% or higher and still more preferably 93 mass% or higher, and preferably 98 mass% or lower, more preferably 97 mass% or lower, still more preferably 96 mass% or lower and further still more preferably 95 mass% or lower, based on the resin composition. When the content of the polyester resin (A) is in the above range, the obtained container has low weight and good appearance.

<Pigment (B)>

The pigment (B) to be used in the present invention is not especially limited as long as coloring the appearance of the container to a target color tone, and according to purposes, may be used singly or in two or more, but preferably used is a pigment of each color tone of green, blue, yellow and red; among these, a green pigment and a blue pigment are more preferable and a green pigment is still more preferable.

The pigment (B) to be used in the present invention preferably has a metal element, and is preferably a pigment containing one or more selected from the group consisting of copper, zinc and titanium, and is more preferably a pigment containing copper.

Pigments include inorganic ones and organic ones, but in the present invention, inorganic pigments are preferably used.

Among the inorganic pigments, preferable are pigments containing one or more selected from the group consisting of copper, zinc and titanium, and more preferable are pigments containing copper.

Specific examples of the inorganic pigments include metal oxides such as copper oxide, titanium oxide, zinc oxide, iron oxide red, Titanium Yellow, calcined pigment green, chrome oxide, Cobalt Blue, silica and alumina, sulfides such as Cadmium Yellow and Cadmium Red, silicates such as Ultramarine Blue, chromate salts such as Chrome Yellow and Chrome Vermilion, clays such as talc, kaolin and clay, inorganic salts such as copper chloride, copper carbonate, calcium carbonate, magnesium carbonate, calcium sulfite, calcium sulfate, aluminum hydroxide, barium sulfate and magnesium carbonate, and carbon black; and metal oxides and inorganic salts are preferable, and inorganic salts are more preferable.

Among the organic pigments, preferable are pigments containing one or more selected from the group consisting of copper, zinc and titanium, and more preferable are pigments containing copper.

Specific examples of the organic pigments include phthalocyanine pigments, azo pigments, anthraquinone pigments, perinone pigments, quinacridone pigments, dioxazine pigments, thioindigo pigments and isoindigo pigments; and phthalocyanine pigments are preferable.

The pigment may be added in a solid state such as a powder in the polyester resin (A) or the polyamide resin (C) constituting the resin composition, or in a mixture of these, but it is preferable to use the pigment previously dispersed in a solvent or the like (hereinafter, also referred to as pigment dispersion). By dispersing the pigment in a solvent or the like, the moldability when the obtained resin composition is molded into the container can be good.

Commercially available pigment dispersions include PIGMENT VERDE (manufactured by Color Matrix Co., Ltd.), which is a copper pigment.

The average particle diameter of the pigment in the container is preferably 1 to 50,000 nm, more preferably 1 to 10,000 nm and still more preferably 1 to 1,000 nm.

In the container used in the present invention, the content of the pigment (B) in the resin composition is preferably 0.01 mass% or higher, more preferably 0.07 mass% or higher, still more preferably 0.15 mass% or higher and further still more preferably 0.3 mass% or higher. Then the content is preferably 5.0 mass% or lower, more preferably 2.0 mass% or lower, still more preferably 1.0 mass% or lower and further still more preferably 0.7 mass% or lower, based on the resin composition.

\<Polyamide resin (C)\>

The polyamide resin (C) to be used in the present invention includes copolymers of a dicarboxylic acid and a diamine, polymers of a lactam or an aminocarboxylic acid, and copolymers of a mixture of these monomers. Among these, copolymers of a dicarboxylic acid and a diamine are preferable.

Among the copolymers of a dicarboxylic acid and a diamine, preferable are copolymers of a dicarboxylic acid and a diamine having an aromatic ring structure, and copolymers of a dicarboxylic acid and an aliphatic diamine, and more preferable are copolymers of a dicarboxylic acid and a diamine having an aromatic ring structure.

Hereinafter, there will be described preferred aspects, a copolymer (hereinafter, also referred to as polyamide resin (C1)) of a dicarboxylic acid and a diamine having an aromatic ring structure, a copolymer (hereinafter, also referred to as polyamide resin (C2)) of a dicarboxylic acid and an aliphatic diamine, and a polymer (hereinafter, also referred to as polyamide resin (C3)) of a lactam or an aminocarboxylic acid.

(Copolymer of a dicarboxylic acid and a diamine having an aromatic ring structure: polyamide resin (C1))

The polyamide resin (C1) has a constitutional unit (hereinafter, also referred to as diamine unit) derived from diamines, and a constitutional unit (hereinafter, also referred to as dicarboxylic acid unit) derived from dicarboxylic acids.

The diamine having an aromatic ring structure being a compound constituting the diamine unit of the polyamide resin (C1) is preferably xylylenediamine.

The polyamide resin (C1) contains preferably 70 mol% or more of a constitutional unit derived from xylylenediamine in the diamine unit, more preferably 80 mol% or more thereof, still more preferably 90 mol% or more thereof and further still more preferably 95 mol% or more thereof. By making 70 mol% or more of the diamine unit to be the constitutional unit derived from xylylenediamine, there is efficiently suppressed the generation of cracks by a chlorine-based bleaching agent composition in a container obtained by using the polyamide, and the color tone can be retained.

Here, the xylylenediamine may be any of ortho one, meta one and para one, but from the viewpoint of chemical resistance, metaxylylenediamine is preferable.

Compounds constituting the diamine unit of the polyamide resin (C1) include, as diamines other than diamines having an aromatic ring structure, straight-chain or branched aliphatic diamines and diamines having an alicyclic structure; from the viewpoint of efficient retention of the color tone and the availability, straight-chain or branched aliphatic diamines are preferable.

The straight-chain or branched aliphatic diamines include tetramethylenediamine, hexamethylenediamine, nonamethylenediamine, 2-methyl-1,5-pentanediamine, undecamethylenediamine, dodecamethylenediamine, 2,2,4-trimethylhexamethylenediamine, 2,4,4-trimethylhexamethylenediamine and 5-methylnonamethylenediamine.

The diamines having an alicyclic structure include 1,3-bis(aminomethyl)cyclohexane, 1,4-bis(aminomethyl)cyclohexane, 1-amino-3-aminomethylcyclohexane, bis(4-aminocyclohexyl)methane, bis(3-methyl-4-aminocyclohexyl)methane, 2,2-bis(4-aminocyclohexyl)propane, bis(aminopropyl)piperazine and aminoethylpiperazine.

Then, in the range of not impairing the advantageous effects of the present invention, there may be used trivalent or more polyvalent amines such as bis(hexamethylene)triamine, and monoamines such as butylamine, hexyl amine and octylamine.

The polyamide resin (C1) contains preferably 70 mol% or more of a constitutional unit derived from an $\alpha,\omega$-linear aliphatic dicarboxylic acid having 4 to 20 carbon atoms in the dicarboxylic acid unit, more preferably 80 mol% or more thereof, still more preferably 90 mol% or more thereof and further still more preferably 95 mol% or more thereof. By making 70 mol% or more of the dicarboxylic acid unit to be the constitutional unit derived from an $\alpha,\omega$-linear aliphatic dicarboxylic acid having 4 to 20 carbon atoms, the resistance of the obtained container to a chlorine-based bleaching agent composition can be enhanced efficiently.

The $\alpha,\omega$-linear aliphatic dicarboxylic acid having 4 to 20 carbon atoms includes succinic acid, glutaric acid, adipic acid, pimelic acid, suberic acid, azelaic acid, sebacic acid, 1,10-decanedicarboxylic acid, 1,11-undecanedicarboxylic acid and 1,12-dodecanedicarboxylic acid; and adipic acid and sebacic acid are preferable, and adipic acid is more preferable. These $\alpha,\omega$-linear aliphatic dicarboxylic acids may be used singly or in combinations of two or more.

As compounds capable of constituting the dicarboxylic acid unit of the polyamide resin (C1), there can be exemplified, other than the $\alpha,\omega$-linear aliphatic dicarboxylic acids having 4 to 20 carbon atoms, dicarboxylic acids having an alicyclic structure such as 1,3-cyclohexanedicarboxylic acid, 1,4-cyclohexanedicarboxylic acid, decalindicarboxylic acid, norbornanedicarboxylic acid, tricyclodecanedicarboxylic acid, pentacyclododecanedicarboxylic acid, isophoronedicarboxylic acid and 3,9-bis(2-carboxyethyl)-2,4,8,10-tetraoxaspiro[5.5]undecane; and dicarboxylic acids having an aromatic ring structure such as terephthalic acid, isophthalic acid, phthalic acid, orthophthalic acid, 2-methylterephthalic acid, naphthalenedicarboxylic acid, biphenyldicarboxylic acid and tetralindicarboxylic acid.

Then, in the range of not impairing the advantageous effects of the present invention, there may be used trivalent or more polyvalent carboxylic acids such as trimellitic acid, trimesic acid, pyromellitic acid and tricarballylic acid, and monocarboxylic acids may also be used.

Then, in the range of not impairing the advantageous effects of the present invention, units constituting the polyamide resin (C1) may contain, in addition to the above-mentioned diamine unit and dicarboxylic acid unit, constitutional units derived from aminocarboxylic acids and the like, and specifically include constitutional units derived from aliphatic aminocarboxylic acids, and constitutional units derived from aromatic aminocarboxylic acids.

Compounds constituting the dicarboxylic acids, the polyvalent carboxylic acids and the monocarboxylic acids to be used for the dicarboxylic acid unit include anhydrides and short-chain alkyl esters. The short-chain alkyl esters specifically include esters having 1 to 3 carbon atoms, that is, methyl esters, ethyl esters, propyl esters and isopropyl esters, and among these, methyl esters are preferable. Further, compounds constituting constitutional units derived from aminocarboxylic acids include lactams being anhydrides.

It is preferable that the combination of the diamine unit and the dicarboxylic acid unit of the polyamide resin (C1) has a constitutional unit derived from diamines containing 70 mol% or more of a constitutional unit derived from xylylenediamine (preferably metaxylylenediamine), and a constitutional unit derived from dicarboxylic acids containing 70 mol% or more of a constitutional unit derived from an $\alpha,\omega$-linear aliphatic dicarboxylic acid having 4 to 20 carbon atoms; and it is more preferable that the polyamide resin (C) has a constitutional unit derived from diamines containing 80 mol% or more of a constitutional unit derived from xylylenediamine (preferably metaxylylenediamine), and a constitutional unit derived from dicarboxylic acids containing 80 mol% or more of adipic acid.

(Copolymer of a dicarboxylic acid and an aliphatic diamine: polyamide resin (C2))

An aliphatic diamine being a compound constituting the diamine unit of the polyamide resin (C2) is preferably an aliphatic diamine having 4 to 20 carbon atoms, and specifically includes tetramethylenediamine, pentamethylenediamine, hexamethylenediamine, nonamethylenediamine, 2-methyl-1,5-pentanediamine, decamethylenediamine, undecamethylenediamine, dodecamethylenediamine, 2,2,4-trimethylhexamethylenediamine, 2,4,4-trimethylhexamethylenediamine and 5-methylnonamethylenediamine; and preferable are hexamethylenediamine, decamethylenediamine, undecamethylenediamine and dodecamethylenediamine; more preferable are hexamethylenediamine, decamethylenediamine and dodecamethylenediamine; and still more preferable are hexamethylenediamine and decamethylenediamine.

Compounds constituting the diamine unit of the polyamide resin (C2) include, as diamines other than aliphatic diamines, diamines having an aromatic ring structure and diamines having an alicyclic structure.

Compounds constituting the dicarboxylic acid unit of the polyamide resin (C2) are preferably $\alpha,\omega$-linear aliphatic dicarboxylic acids having 4 to 20 carbon atoms, and specifically includes the above-mentioned compounds.

The $\alpha,\omega$-linear aliphatic dicarboxylic acids having 4 to 20 carbon atoms in the copolymer of a dicarboxylic acid and an aliphatic diamine include succinic acid, glutaric acid, adipic acid, pimelic acid, suberic acid, azelaic acid, sebacic acid, 1,10-decanedicarboxylic acid, 1,11-undecanedicarboxylic acid and 1,12-dodecanedicarboxylic acid, and are preferably adipic acid and sebacic acid. These $\alpha,\omega$-linear aliphatic dicarboxylic acids may be used singly or in combinations of two or more.

Compounds capable of constituting the dicarboxylic acid unit of the polyamide resin (C2) include, in addition to the α,ω-linear aliphatic dicarboxylic acids having 4 to 20 carbon atoms, the above-mentioned dicarboxylic acids having an alicyclic structure and dicarboxylic acids having an aromatic ring; and specific compounds are the same as ones to be used for the copolymer of a dicarboxylic acid and a diamine having an aromatic ring structure.

Then, in the range of not impairing the advantageous effects of the present invention, trivalent or more polyvalent carboxylic acids may be used and monocarboxylic acids may also be used.

Then, it is preferable that as the combination of the diamine unit and the dicarboxylic acid unit of the polyamide resin (C) which is the copolymer of a dicarboxylic acid and an aliphatic diamine, the polyamide resin (C) has a constitutional unit derived from diamines containing 70 mol% or more of a constitutional unit derived from an aliphatic diamine having 4 to 20 carbon atoms, and a constitutional unit derived from dicarboxylic acids containing 70 mol% or more of a constitutional unit derived from an α,ω-linear aliphatic dicarboxylic acid having 4 to 20 carbon atoms.

(Polymer of a lactam or an aminocarboxylic acid: polyamide resin (C3))

In the case where the polyamide resin (C3) is a polymer of a lactam or an aminocarboxylic acid, a constitutional unit (hereinafter, also referred to as aminocarboxylic acid unit) derived from ω-aminocarboxylic acids preferably contains a constitutional unit derived from an ω-amino-linear aliphatic carboxylic acid having 4 to 20 carbon atoms, and contains more preferably 70 mol% or more of the constitutional unit derived from the ω-amino-linear aliphatic carboxylic acid having 4 to 20 carbon atoms, still more preferably 80 mol% or more thereof, further still more preferably 90 mol% or more thereof and further still more preferably 95 mol% or more thereof.

Compounds constituting the aminocarboxylic acid unit of the polyamide resin (C3) include lactams being anhydrides thereof and ω-amino-linear aliphatic carboxylic acids having 4 to 20 carbon atoms; and from the viewpoint of the availability, lactams are preferable.

The lactams include ε-caprolactam, undecanelactam and ω-laurolactam; and ε-caprolactam is preferable.

The co-amino-linear aliphatic carboxylic acid having 4 to 20 carbon atoms includes 6-aminocaproic acid, 11-aminoundecanoic acid and 12-aminododecanoic acid. These may be used singly or concurrently in two or more.

Then, in the range of not impairing the advantageous effects of the present invention, there can also be used, as copolymer units, constitutional units derived from the above-mentioned diamine units and dicarboxylic acid units, and aromatic aminocarboxylic acids such as para-aminomethyl benzoate.

(Examples of the polyamide resin (C))

Specific examples of the polyamide resin (C) in the present invention include polyamide MXD6 (polyxylyleneadipamide), polyamide MXD10 (polyxylylenesebacamide), polyamide MXD6I (isophthalic acid-copolymerized polymetaxylyleneadipamide), nylon 6 (polycaproamide), nylon 66 (polyhexamethyleneadipamide), nylon 610 (polyhexamethylenesebacamide), nylon 612 (polyhexamethylenedodecamide), nylon 1010 (polydecamethylenesebacamide), nylon 11 (polyundecanamide), nylon 116 (polyundecamethyleneadipamide), nylon 12 (polydodecanamide), and copolymers thereof, from the viewpoint of the availability and the color tone retentiveness and the crack suppression performance, preferable is one or more selected from the group consisting of polyamide MXD6, polyamide MXD10, nylon 6, nylon 66, nylon 1010, nylon 11 and nylon 12; more preferable is one or more selected from the group consisting of polyamide MXD6, polyamide MXD10, nylon 6, nylon 66 and nylon 12; and still more preferable is one or more selected from the group consisting of polyamide MXD6 and polyamide MXD10. These polyamide resins may be used singly or concurrently in two or more.

(Method for producing the polyamide resin (C))

It is preferable that the polyamide resin (C) is produced by a melt polycondensation method.

The melt polycondensation method is preferably a production method in which a diamine is added directly to a dicarboxylic acid in a melt state to carry out polycondensation. In this case, the polycondensation is preferably progressed while in order to hold the reaction system in a homogeneous liquid state, the diamine is continuously added to the dicarboxylic acid and during that, the temperature of the reaction system is raised so as not to become lower than the melting points of oligoamide and polyamide produced.

In order to attain the effect of promoting the amidation reaction and the effect of preventing coloration in the polycondensation reaction time, it is preferable to add a phosphorus atom-containing compound in the polycondensation reaction system of the polyamide resin (C).

The phosphorus atom-containing compound is, from the viewpoint of having a high effect of promoting the amidation reaction and being excellent in the effect of preventing coloration, preferably a hypophosphorous acid metal salt such as sodium hypophosphite, potassium hypophosphite, lithium hypophosphite or calcium hypophosphite, and more preferably sodium hypophosphite.

The amount of the phosphorus atom-containing compound to be added in the polycondensation reaction system of the polyamide resin (C) is, in terms of phosphorus atom concentration in the polyamide resin (C), preferably 1 to 500 ppm, more preferably 3 to 450 ppm and still more preferably 5 to 400 ppm. By making the amount of the phosphorus atom-containing compound to be added to be in the above range, since the coloration of polyamide during the polycondensation reaction is prevented and gelation of the polyamide can be suppressed, the appearance of the obtained container can be kept good.

In the polycondensation reaction system of the polyamide resin (C), an alkaline metal compound and/or an alkaline earth metal compound may further be added concurrently with the phosphorus atom-containing compound.

It is preferable that the polyamide resin (C) obtained in the melt polycondensation method is used by being pelletized and thereafter dried, and it is more preferable that the obtained polyamide resin (C) is subjected to solid-phase polymerization in order to raise the degree of polymerization.

It is preferable to carry out the solid-phase polymerization under reduced pressure and by heating the pellets.

(Properties and the like of the polyamide resin (C))

The relative viscosity of the polyamide resin (C) is preferably 1.5 to 4.2, more preferably 1.6 to 4.0, still more preferably 1.7 to 3.8 and further still more preferably 1.9 to 3.0.

By making the relative viscosity of the polyamide resin (C) to be set in the above range, the moldability becomes stable and a container having a good appearance can be obtained.

Here, in the present invention, the relative viscosity of the polyamide resin (C) is measured by the following method. Specifically, 0.2 g of a polyamide resin is precisely weighed, and dissolved under stirring in 20 mL of a 96-mass% sulfuric acid at 20 to 30°C. After complete dissolution, 5 mL of the solution is quickly taken in a Cannon-Fenske viscometer, and left in a thermostatic chamber at 25°C for 10 min, and thereafter, the efflux time ($t$) of the solution is measured. The efflux time ($t_0$) of the 96-mass% sulfuric acid is also similarly measured. The relative viscosity of the polyamide resin is calculated from the following expression and by using the values of $t$ and $t_0$ measured.

$$\text{Relative viscosity} = t/t_0$$

The content of the polyamide resin (C) in the resin composition is preferably 1 mass% or higher, more preferably 2 mass% or higher, still more preferably 3 mass% or higher, further still more preferably 3.5 mass% or higher, further still more preferably 4 mass% or higher and further still more preferably 5 mass% or higher. Then, the content is preferably 9 mass% or lower, more preferably 8 mass% or lower and still more preferably 7 mass% or lower, based on the resin composition.

When the content of the polyamide resin (C) is 1 mass% or higher, the generation of cracks can sufficiently be suppressed; and when the content is 9 mass% or lower, the moldability and the appearance of the obtained container is good. In particular, when the content of the polyamide resin (C) is 3.5 mass% or higher, the color retentiveness of the obtained container is excellent.

In the container used in the present invention, the mass ratio [(B)/(C)] of the pigment (B) and the polyamide resin (C) in the resin composition is 1/99 to 20/80, preferably 1/99 to 15/85, more preferably 1/99 to 13/87, still more preferably 3/97 to 13/87 and further still more preferably 5/95 to 10/90.

By adding the polyamide in the above ratio with respect to the pigment, the color tone can effectively be retained.

The mass ratio [(A)/(C)] of the polyester resin (A) and the polyamide resin (C) in the resin composition is preferably 91/9 to 99/1, more preferably 91/9 to 96/4 and still more preferably 91/9 to 95/5.

The resin composition constituting the container used in the present invention may contain components other than the polyester resin (A), the pigment (B) and the polyamide resin (C), but the total amount of the polyester resin (A), the pigment (B) and the polyamide resin (C) is preferably 70 mass% or higher of the whole container, more preferably 80 mass% or higher thereof, still more preferably 90 mass% or higher thereof and further still more preferably 95 mass% or higher thereof.

<Recycled material>

The resin composition constituting the container used in the present invention may comprise a recycled material, and from the viewpoint of reducing the environmental load, it is preferable that a recycled material is contained.

The recycled material includes the above-mentioned recycled polyester and recycled polyamide, and these may contain pigments.

Then, there may be contained a recycled resin composition obtained by recycling the container.

In the case where the recycled polyester, the recycled polyamide, pigments contained therein, and resins and pigments contained in the recycled resin composition correspond to the polyester resin (A), the pigment (B) and the polyamide resin (C), respective contents thereof are added to the content of the polyester resin (A), the content of the pigment (B) and the content of the polyamide resin (C), respectively.

It is preferable that the resin composition constituting the container used for a chlorine-based liquid bleaching agent composition in the present invention comprises a recycled material, and the recycled material comprises at least one selected from the group consisting of the polyester resin (A), the pigment (B) and the polyamide resin (C).

In the case of comprising a recycled material, the content rate of the recycled material is preferably 1 to 20 mass% and more preferably 5 to 15 mass%. When the content rate of the recycled material is in this range, cracks are suppressed and the color tone is retained, which are the advantageous effects of the present invention, and simultaneously, the environmental load can also be reduced.

<Other components>

As other components to be contained in the container used in the present invention, a recycle aid agent and a transition metal are exemplified.

The recycle aid agent is, in obtaining the recycled polyester, a compound having the effect of suppressing yellowing in a recycling process, and is preferably an aldehyde scavenger.

The recycle aid agent is preferably a compound having a capability of suppressing yellowing of the polyester resin and containing an amino group, and specifically, is more preferably at least one compound selected from the group consisting of anthranylamide, anthranylic acid and nylon 6I/6T.

The container used in the present invention, with the aim of inducing an oxidation reaction of the polyamide resin (C) to enhance an oxygen absorption function and enhance the gas barrier property, may contain a transition metal.

The transition metal is, from the viewpoint of developing the oxygen absorption capability, preferably at least one selected from the group consisting of cobalt, iron, manganese and nickel.

In the present invention, from the viewpoint of well developing the oxygen absorption capability, it is preferable to use at least one selected from the group consisting of carboxylate salts, carbonate salts, acetylacetonato complexes, oxides and halides containing the transition metal.

The transition metal may be used singly or in combinations of two or more.

The container used in the present invention may contain, in addition to the above components, additives such as a heat stabilizer, a light stabilizer, a moistureproof agent, a waterproof agent, a lubricant and a spreader.

<Method for producing the container, and the container>

With regard to the container used in the present invention, it is preferable that the container is obtained by molding the resin composition comprising, at least, the polyester resin (A), the pigment (B) and the polyamide resin (C).

A method for producing the resin composition is not especially limited, but in order to enhance the kneading dispersibility of components having low content proportions, it is preferable to previously prepare a masterbatch.

For example, the pigment (B) may be used in the form of powder as it is, but it is preferable to previously make a masterbatch by kneading the pigment (B) with a small amount of the polyester resin (A), a small amount of the polyamide resin (C) or a mixture thereof, and it is more preferable to previously make a masterbatch by kneading the pigment (B) with a small amount of the polyester resin (A).

Further, it is still more preferable to previously disperse the pigment (B) in a solvent or the like, and it is further still more preferable to previously make a masterbatch by kneading the pigment dispersion with a small amount of the polyester resin (A), a small amount of the polyamide resin (C) or a mixture thereof, and it is further still more preferable to previously make a masterbatch by kneading the pigment dispersion with a small amount of the polyester resin (A).

A masterbatch containing the pigment (B), the polyester resin (A) and the polyamide resin (C) may be previously mixed by a dry-blending mode and thereafter melt kneaded, or the masterbatch containing the pigment (B), the polyester resin (A) and the polyamide resin (C) are previously mixed by the dry-blending mode, and thereafter, the obtained dry-blended product as it is may be molded by a molding machine such as an injection molding machine, but it is preferable that the dry-blended product as it is molded by a molding machine such as an injection molding machine.

The melt kneading temperature when the masterbatch or the resin composition is obtained by melt kneading is preferably 240 to 295°C, more preferably 245 to 292°C and still more preferably 250 to 290°C.

The melt kneading time when the masterbatch or the resin composition is obtained by melt kneading is not especially limited, but is preferably 1 sec to 5 min, more preferably 3 see to 4 min and still more preferably 5 sec to 3 min.

An apparatus to be used for the melt kneading is not especially limited, but includes open-type mixing rolls, non-open-type Banbury mixers, kneaders, and continuous kneading machines (single-screw kneading machines, twin-screw kneading machines, multi-screw kneading machines and the like).

As described above, when the masterbatch containing the pigment (B), the polyester resin (A) and the polyamide resin (C) are mixed by a dry-blending mode, the above recycled material may be mixed therewith. That is, the masterbatch containing the pigment (B), the polyester resin (A), the polyamide resin (C) and the recycled material may be previously mixed by the dry-blending mode, and thereafter melt kneaded, or the masterbatch containing the pigment (B), the polyester resin (A), the polyamide resin (C) and the recycled material are previously mixed by the dry-blending mode, and thereafter, the obtained dry-blended product as it is may be molded by a molding machine such as an injection molding machine, but it is preferable that the dry-blended product as it is is molded by a molding machine such as an injection molding machine.

The recycled material to be used here is preferably the recycled material described in the above section of <Recycled material>, and includes the recycled polyester resin and the recycled polyamide, and preferably contains at least one selected from the group consisting of the polyester resin (A), the pigment (B) and the polyamide resin (C).

The recycled material may contain a recycled resin composition obtained by recycling the container used in the present invention. It is preferable to use a recycled resin composition obtained from defective molded articles produced in the process of production of the container and recovered articles from markets; and it is more preferable to use a recycled resin composition obtained from defective molded articles produced in the process of production of the container. By recovering defective molded articles, the yield can be improved.

The shape of the recycled material is preferably a pellet shape, a flaky shape or a powdery shape.

A method for producing the container used in the present invention is not especially limited, but it is preferable that the resin composition obtained as described above is molded to obtain the container. The molding method includes a compression molding method, an extrusion blow molding method, an injection blow molding method and a stretch blow molding method, and a stretch blow molding method is preferable.

It is preferable to obtain the container, for example, by injecting the resin composition melted from an injection molding machine into a mold to produce a preform, and thereafter heating to a stretching temperature and blow stretching the resultant. In the case of obtaining the container by the stretch blow molding method, the stretching ratio is preferably 2 to 30 times, more preferably 3 to 25 times and still more preferably 5 to 20 times.

It is preferable that the container used in the present invention is a bottle-shaped hollow container, and from the viewpoint of obtaining uniform containers by every molding machine, it is preferable that the container is a single-layer container. The container is of a single layer and provides excellent resistance to a chlorine-based liquid bleaching agent composition.

[Bleaching agent article]

The bleaching agent article of the present invention is an article comprising a container having a chlorine-based liquid bleaching agent composition accommodated therein, and specifically is a bleaching agent article comprising a container having a chlorine-based liquid bleaching agent composition accommodated therein; the container comprises the resin composition comprising the polyester resin (A), the pigment (B) and the polyamide resin (C), wherein the content of the polyester resin (A) is 90 to 99 mass%, and the mass ratio [(B)/(C)] of the (B) and the (C) is 1/99 to 20/80.

<Chlorine-based liquid bleaching agent composition>

A chlorine-based liquid bleaching agent composition (hereinafter, also simply referred to as "bleaching agent composition") to be accommodated in the container of the present invention will be described.

(Bleaching component)

The bleaching agent composition comprises, as a bleaching component, preferably a chlorite salt, a hypochlorite salt, a chlorinated isocyanurate salt or the like, more preferably a hypochlorite salt or a chlorinated isocyanurate salt, and still more preferably a hypochlorite salt.

The chlorite salt, the hypochlorite salt and the chlorinated isocyanurate salt are preferably metal salts, and more preferably alkaline metal salts. The alkaline metal is preferably sodium or potassium, and more preferably sodium.

Among the bleaching components, sodium hypochlorite is especially preferable.

In the case where the chlorine-based liquid bleaching agent composition contains sodium hypochlorite, the content of the sodium hypochlorite is preferably 0.5 to 15 mass%, more preferably 1 to 12 mass%, still more preferably 2 to 9 mass% and further still more preferably 2 to 8 mass%.

When the content of the sodium hypochlorite is in the above range, the good beaching property and storage stability can be provided.

(Alkaline agent)

It is preferable that the chlorine-based liquid bleaching agent composition comprises an alkaline agent. The alkaline agent is added in order to enhance the stability of the bleaching component such as sodium hypochlorite in the bleaching agent composition and additionally attain a sufficient bleaching effect on fouling.

The alkaline agent includes alkaline metal hydroxides, carbonate salts, silicate salts and phosphate salts of alkaline metals, and is preferably an alkaline metal hydroxide.

The alkaline metal is preferably sodium or potassium.

The alkaline metal hydroxide is preferably sodium hydroxide, potassium hydroxide or the like, and more preferably sodium hydroxide.

The concentration of the alkaline agent in the bleaching agent composition is preferably 0.1 mass% or higher and more preferably 0.2 mass% or higher. Then, the concentration is preferably 5 mass% or lower, more preferably 3 mass% or lower, still more preferably 1 mass% or lower and especially preferably 0.8 mass% or lower. When the concentration of the alkaline agent is in the above range, the stability of sodium hypochlorite also becomes good and a sufficient bleaching effect is attained.

(Chelating agent)

The bleaching agent composition may contain a chelating agent.

The chelating agent has a function of trapping heavy metals contained in the bleaching agent composition to stabilize the bleaching agent composition. Examples thereof include aminophosphonic acid-N-oxide, particularly [nitrilotris(methylene)]triphosphonic acid-N-oxide, 2-phosphonobutane-1,2,4-tricarboxylate salts, 1-hydroxyethane-1,1-diphosphonate salts and crosslinking-type polycarboxylate salts. The chelating agent may be used singly or concurrently in two or more, and is not especially limited.

The content of the chelating agent is, in the bleaching agent composition, preferably 0.1 to 30 mass% and more preferably 0.3 to 20 mass%. When the content of the chelating agent is in this range, a sufficient cleaning power is attained.

(Surfactant)

It is preferable that the chlorine-based liquid bleaching agent composition comprises a surfactant. Due to comprising a surfactant, the bleaching performance on articles having various surface physical properties is improved. The surfactant includes anionic surfactants, amphoteric surfactants, nonionic surfactants and cationic surfactants; anionic surfactants and amphoteric surfactants are preferable, and anionic surfactants are more preferable.

The anionic surfactants include sulfate ester salts, carboxylate salts, sulfonate salts and phosphate ester salts; sulfate ester salts, carboxylate salts and sulfonate salts are preferable; sulfate ester salts and carboxylate salts are more preferable; and sulfate ester salts are still more preferable.

The sulfate ester salts include alkylsulfate ester salts and alkyl ether sulfate ester salts; and alkyl ether sulfate ester salts are preferable.

As specific examples of the alkyl ether sulfate ester salt, polyoxyalkylene alkyl ether sulfate ester salts are preferable, and polyoxyethylene alkyl ether sulfate ester salts are more preferable.

The number of carbon atoms of the alkyl group of the polyoxyethylene alkyl ether sulfate ester salts is preferably 12 to 18, more preferably 12 to 14 and still more preferably 12.

The average addition molar number of the ethyleneoxy group of the polyoxyethylene alkyl ether sulfate ester salts is preferably 0.5 to 10 and more preferably 1 to 5.

The polyoxyethylene alkyl ether sulfate ester salts are preferably sodium salts, potassium salts and triethanolamine salts; sodium salts and triethanolamine salts are more preferable; and sodium salts are still more preferable.

Specifically, sodium polyoxyethylene lauryl ether sulfate is preferable.

The carboxylate salts include fatty acid salts and $\alpha$-sulfo-fatty acid ester salts.

The sulfonate salts include alkylbenzenesulfonate salts, $\alpha$-olefinsulfonate salts and alkylsulfonate salts.

The phosphate ester salts include alkylphosphate ester salts.

The amphoteric surfactants include alkylamine oxides, alkyl betaines and alkylaminofatty acid salts; and alkylamine oxides are preferable.

The nonionic surfactants include sucrose fatty acid ester sorbitan fatty acid esters, polyoxyethylene sorbitan fatty acid esters, fatty acid alkanolamides, polyoxyethylene alkyl ethers and polyoxyethylene alkyl phenyl ethers.

The cationic surfactants include alkyl trimethyl ammonium salts and dialkyl dimethyl ammonium salts. The cationic surfactant is used mainly in order to impart the sanitization property.

Among these, polyoxyalkylene alkyl ether sulfate ester salts and alkylamine oxides are preferable.

The surfactants may be used singly or concurrently in two or more. The content of the surfactant in the chlorine-based liquid bleaching agent composition is preferably 0.01 to 7.0 mass%, more preferably 0.03 to 5.0 mass% and still more preferably 0.05 to 3.0 mass%.

(Other components and the like)

It is preferable that the bleaching agent composition contains a solvent. The content of the solvent in the chlorine-based liquid bleaching agent composition is preferably the remainder, excluding the bleaching component, the surfactant, the alkaline agent, the chelating agent and other components cited in the present section, in the chlorine-based liquid bleaching agent composition.

The solvent contained in the bleaching agent composition includes water and water-miscible organic solvents, and water is preferable. The content of water in the chlorine-based liquid bleaching agent composition is preferably 80 to 98 mass%, more preferably 88 to 98 mass% and still more preferably 90 to 98 mass%. When the content of water is in the above range, the composition is excellent in the storage stability.

As the water-miscible organic solvents, alcohols and ethers are exemplified.

The bleaching agent composition may further contain fluorescent dyes, radical scavengers such as BHT (dibutylhydroxytoluene), polishing agents and clouding agents such as calcium carbonate, silica, montmorillonite and smectite, perfumery represented by terpene alcohol-based perfume, and the like.

The pH of the chlorine-based liquid bleaching agent composition is preferably alkaline, and the pH at 20°C is preferably 11 to 13.8, more preferably 11.3 to 13.7 and still more preferably 11.5 to 13.5. When the pH of the chlorine-based liquid bleaching agent composition is in the above range, the composition is preferable from the viewpoint of the storage stability and the bleaching effect.

Examples

Hereinafter, the present invention will be described in more detail based on Examples, but the present invention is not limited to these Examples. Materials, evaluation methods and a production method of bottles used in Examples and Comparative Examples were as follows.

1. Materials

[Container]

<Polyester resin (A)>

There was used a polyethylene terephthalate resin (trade name: Unipet BK-2180, manufactured by Mitsubishi Chemical Corp., intrinsic viscosity: 0.83 dL/g, having no sulfonic acid metal salt group). In the use, the resin was dried at 150°C for 8 hours by a dehumidifying dryer.

<Pigments (B)>

(Pigment dispersion)

PIGMENT VERDE (manufactured by Color Matrix Co., Ltd.) as a pigment dispersion was melt kneaded in the above polyethylene terephthalate resin to thereby prepare a masterbatch of 3 mass% in pigment concentration.

(Pigment powder)

Irgalite Green GFNP (Pigment Green 7, manufactured by BASF Color & Effects Japan Ltd., chlorinated phthalocyanine) as a powder pigment was melt kneaded in the above polyethylene terephthalate resin to thereby prepare a masterbatch of 3 mass% in pigment concentration.

<Dye>

A dye for resins, SDN Green (manufactured by Okadaya Co., Ltd.) as a dye was melt kneaded in the above polyethylene terephthalate resin to thereby prepare a masterbatch of 3 mass% in dye concentration.

When the pigments and the dye were used in Examples and Comparative Examples, the masterbatches were used so that the amounts of the pigments and the dye in the resin compositions (containers) became amounts indicated in Table 1.

<Polyamide resin (C)>

(MXD6)

15 kg of adipic acid and 15 g of sodium hypophosphite monohydrate were charged in a 50-L jacketed reaction vessel equipped with a stirrer, a partial condenser, a cooler, a thermometer, a driptank and a nitrogen gas inlet pipe; the reaction vessel was thoroughly purged with nitrogen; the temperature was raised to 180°C under a small volume of a nitrogen gas flow to uniformly melt the adipic acid; and thereafter, 13.8 kg of metaxylylenediamine was dropped over 170 min under stirring in the system. During this time, the internal temperature was raised continuously up to 245°C. Water produced in polycondensation was removed outside the system through the partial condenser and the cooler. After the finish of the dropping of the metaxylylenediamine, the internal temperature was raised further up to 260°C; the reaction was continued for 1 hour; thereafter, a polymer was taken out as a strand from a nozzle in the bottom part of the reaction vessel, and water cooled and then pelletized to thereby obtain a polymer.

Then, the polymer obtained by the above operations was charged in a 50-L rotary tumbler equipped with a heating jacket, a nitrogen gas inlet pipe and a vacuum line; and there were carried out three times the operation of reducing the pressure in the system and making the pressure to be the atmospheric pressure by using nitrogen of 99% by volume or more in purity, under rotation. Then, the temperature in the system was raised to 140°C. Then, the system inside was reduced in pressure and raised in temperature continuously further to 190°C, and held at 190°C for 30 min; thereafter, the system inside was returned to the atmospheric pressure by introducing nitrogen and thereafter, cooled to thereby obtain a polyamide (polymetaxylyleneadipamide). The obtained polyamide had a relative viscosity of 2.7.

(PA6)

There was used a nylon 6 (Polyamide 6, trade name: UBE Nylon 1022B, manufactured by Ube Industries, Ltd.).

[Chlorine-based liquid bleaching agent compositions]

(6-mass% sodium hypochlorite)

There was used a commercially available bleaching agent, Kitchen Haiter (manufactured by Kao Corp., sodium hypochlorite (6 mass%), sodium alkyl ether sulfate ester, sodium hydroxide, pH: 13 to 13.5) as it was.

(3-mass% sodium hypochlorite)

The above bleaching agent, Kitchen Haiter, was diluted with the same amount (mass) of ion-exchange water to thereby obtain a chlorine-based liquid bleaching agent composition having 3 mass% of sodium hypochlorite.

2. Evaluation methods

[Storage test]

A 500-mL bottle container obtained in Examples and Comparative Examples each was filled with 500 mL of the above chlorine-based liquid bleaching agent composition; and there was visually evaluated the presence/absence of cracks generated on the bottle after 6-month storage under the environment of 40°C.

[Measurement of the color difference (Evaluation of the color tone retentiveness)]

By using the same resin composition as in each Example and Comparative Example, a film of 50 $\mu$m in thickness was fabricated. The film was dipped in the chlorine-based liquid bleaching agent composition, and stored in the environment of 40°C for 1 month. "a" values before and after the dipping in the bleaching agent were compared by using a color difference meter (ZE2000, manufactured by Nippon Denshoku Industries Co., Ltd.), and the value of the difference between the "a" values is indicated as a change in "a" value in Table 1. The smaller the numerical value of the change in "a" value, the better the color tone retentiveness. Then, evaluation in 4 ranks was carried out according to the following criteria. A to C were being usable in practical use. When the "a" value was 2.0 or less, the rank was designated as A; when exceeding 2.0 and 3.5 or less, as B; when exceeding 3.5 and 5.0 or less, as C; and when exceeding 5.0, as D.

3. Production of bottles (containers for chlorine-based liquid bleaching agent composition)

[Examples 1 to 7 and Comparative Examples 1, 2]

A polyethylene terephthalate resin, a masterbatch containing a pigment or a dye, and a polyamide in a resin composition constituting each bottle (container for chlorine-based liquid bleaching agent composition) obtained were weighed so that the amount of each component became an amount indicated in Table 1, thereafter dry blended and charged in a preform injection molding machine (type: SE130DU-CI, manufactured by Sumitomo Heavy Industries, Ltd.) and injection molded under the following condition to thereby make a single-layer preform.

The molding condition of the single-layer preform was as follows.

- Mass of one preform: 25 g
- Hot runner/cylinder temperature: 285°C
- Hot runner nozzle temperature: 290°C
- Mold cooling water temperature: 15°C
- Molding cycle time: 33 sec

Then, the fabricated single-layer preform was cooled and thereafter subjected to biaxial stretch blow molding by using a blow molding machine (type: EFB-1000ET, manufactured by Frontier Inc.) and under the following condition to thereby obtain a single-layer bottle (height: 223 mm, body diameter: 65 mm, volume: 500 mL, wall thickness: 330 $\mu$m, mass: 25.0 g). The mold was of 500-mL petaloid bottom type, and had a surface temperature before the blowing (surface temperature after the preform heating) of 107 to 110°C.

The biaxial stretch blow molding condition was as follows.

- Preform heating temperature: 107 to 110°C
- Pressure for stretch rod: 0.5 MPa
- Primary blow pressure: 0.5 MPa
- Secondary blow pressure: 2.5 MPa
- Primary blow delay time: 0.32 sec
- Primary blow time: 0.28 sec
- Secondary blow time: 2.0 see
- Blow exhaust time: 0.6 see
- Mold temperature: 30°C

Bottles were obtained as described above. Then, the obtained bottles were evaluated based on the above-mentioned methods. The results are shown in Table 1.

Table 1

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Container composition (mass%) | Polyester resin (A) | | 94.5 | 96.5 | 92.5 | 94.8 | 94.5 | 94.45 | 94.5 | 99.5 | 94.5 |
| | Pigment (B) or Dye | Pigment dispersion | 0.5 | 0.5 | 0.5 | 0.2 | 0.5 | - | 0.5 | 0.5 | - |
| | | Pigment powder | - | - | - | - | - | 0.05 | - | - | - |
| | | Dye | - | - | - | - | - | | - | - | 0.5 |
| | Polyamide resin (C) | MXD6 | 5.0 | 3.0 | 7.0 | 5.0 | 5.0 | 5.0 | - | - | 5.0 |
| | | PA6 | - | - | - | - | - | - | 5.0 | - | - |
| | mass ratio | (B)/(C) | 9/91 | 14/86 | 7/93 | 4/96 | 9/91 | 1/99 | 9/91 | - | 9/91 |
| Liquid bleaching agent composition (mass%) | sodium hypochlorite | | 6 | 6 | 6 | 6 | 3 | 6 | 6 | 6 | 6 |
| Evaluations | Storage test | crack | absent | absent | absent | absent | absent | absent | absent | present | absent |
| | Color tone retentiveness | Change in "a" value | 0.6 | 3.1 | 0.4 | 0.1 | 0.3 | 0.3 | 4.5 | 9.0 | 10.5 |
| | | Evaluation in 4 ranks | A | B | A | A | A | A | C | D | D |

[Comparative Example 3]

A bottle composed of a resin composition containing no pigment was obtained in the same manner as in Example 1, except for, in the production of the bottle (container for chlorine-based liquid bleaching agent composition) of Example 1, using no masterbatch containing a pigment dispersion and altering the amount of the polyester resin (A) from 94.5 mass% to 95 mass%.

[Measurement of the active chlorine concentration (Evaluation of the content protecting property)]

The bottles obtained in Example 1 and Comparative Example 3 were filled with the chlorine-based liquid bleaching agent composition, and stored in the environment of 40°C for 6 months; and the bleaching liquid was analyzed by the following method to measure the concentration of sodium hypochlorite. The content protecting property of the bottles was evaluated based on the criterion in which when the difference in active chlorine concentration of the chlorine-based liquid bleaching agent composition between initial and after the storage test is 2% or smaller, the case was determined as acceptable. Comparative Example 3, in which the difference in active chlorine concentration was 2.5%, was unacceptable; whereas Example 1, in which the difference was 0.8%, was acceptable. From this fact, it is found that, in the bleaching agent composition stored in the bottles of Examples, the active chlorine concentration was less likely to be reduced.

Analysis method: in order to determine active chlorine, in a solution of acetic acid present concurrently with sodium hypochlorite, iodine separated from potassium iodide was titrated with sodium thiosulfate.

2 g of potassium iodide and 6 mL of a 50% (v/v) acetic acid aqueous solution were added to 10 mL of a specimen, and sealed and well shaken and mixed, and left in a dark place for 5 min. The separated iodine was titrated with a 0.1N sodium thiosulfate solution; and iodine was reduced and when the solution came to assume light yellow when the end point became near, the state that 3 mL of a 0.5% starch solution was added and the blue color disappeared was defined as an end point. The active chlorine (mass/volume (%)) was determined by the following expression.

Active chlorine (mass/volume(%) = {(a-b) $\times$ f $\times$ 0.0037221 / v} $\times$ 100 / 10 $\times$ 100

a: titration amount of a specimen (mL)
b: blank titration amount (mL)
f: 1.002
v: amount of the specimen collected (mL)

According to the evaluation results of Examples and Comparative Examples, it has been found that the bottles of Examples exhibited no generation of cracks also in the storage test, exhibited little change in the color tone also in the color difference measurement, were excellent in the color tone retentiveness, and further exhibited little change in the chlorine concentration amount in the long-period storage, and were excellent also in the content protecting property.

4. Production of recycled flakes

By imitating recycling of bottle wastes (defective bottles), the bottles obtained in Example 1, Example 2, Comparative Example 1 and Comparative Example 2 were crushed and recycled flakes were fabricated as follows. Flakes obtained by crushing the bottles were dried at 150°C for 6 hours in a vacuum dryer (automatic sequence vacuum dryer, DP610P, manufactured by Yamato Scientific Co., Ltd.). For the flakes after being dried, the moisture percentage was confirmed to be 500 ppm or lower by using a moisture meter (VA-236/CA-200, manufactured by Mitsubishi Chemical Analytech Co., Ltd.). The flakes after being dried were designated as recycled flakes (recycled resin composition). Here, the flakes obtained from the bottles obtained in Example 1, Example 2, Comparative Example 1 and Comparative Example 2 were designated as flake 1, flake 2, flake 3 and flake 4, respectively.

5. Production of bottles (containers for chlorine-based liquid bleaching agent composition)

[Examples 8 to 12 and Comparative Examples 4 to 6]

In each Example, a polyethylene terephthalate resin, a masterbatch containing a pigment or a dye, a polyamide and a recycled flake were weighed so that the amount of each component became an amount of a component composition in production indicated in Table 2, thereafter dry blended and charged in a preform injection molding machine (type:

SE130DU-CI, manufactured by Sumitomo Heavy Industries, Ltd.) and injection molded under the following condition to thereby make a single-layer preform.

The molding condition of the single-layer preform was as follows.

- Mass of one preform: 25 g
- Hot runner/cylinder temperature: 285°C
- Hot runner nozzle temperature: 290°C
- Mold cooling water temperature: 15°C
- Molding cycle time: 33 sec

Then, the fabricated single-layer preform was cooled and thereafter subjected to biaxial stretch blow molding by using a blow molding machine (type: EFB-1000ET, manufactured by Frontier Inc.) under the following condition to thereby obtain a single-layer bottle (height: 223 mm, body diameter: 65 mm, volume: 500 mL, wall thickness: 330 $\mu$m, mass: 25.0 g). The mold was of 500-mL petaloid bottom type, and had a surface temperature before the blowing (surface temperature after the preform heating) of 107 to 110°C.

The biaxial stretch blow molding condition was as follows.

- Preform heating temperature: 107 to 110°C
- Pressure for stretch rod: 0.5 MPa
- Primary blow pressure: 0.5 MPa
- Secondary blow pressure: 2.5 MPa
- Primary blow delay time: 0.32 see
- Primary blow time: 0.28 sec
- Secondary blow time: 2.0 see
- Blow exhaust time: 0.6 see
- Mold temperature: 30°C

Bottles were obtained as described above. Then, the obtained bottles were evaluated based on the above-mentioned methods. The results are shown in Table 2.

Table 2

| | | | Example 8 | Example 9 | Example 10 | Example 11 | Example 12 | Comparative Example 4 | Comparative Example 5 | Comparative Example 6 |
|---|---|---|---|---|---|---|---|---|---|---|
| Component composition in production (mass%) | Polyester resin (A) | | 85.05 | 80.325 | 85.05 | 86.85 | 82.025 | 89.55 | 84.575 | 85.05 |
| | Pigment (B) or Dye | Pigment dispersion | 0.45 | 0.425 | 0.45 | 0.45 | 0.425 | 0.45 | 0.425 | - |
| | | Dye | - | - | - | - | - | - | - | 0.45 |
| | Polyamide resin (C) | MXD6 | 4.5 | 4.25 | 4.5 | 2.7 | 2.55 | - | - | 4.5 |
| | Recycled flake | flake 1 (Example 1 bottle) | 10.0 | 15.0 | 10.0 | - | - | - | - | - |
| | | flake 2 (Example 2 bottle) | - | - | - | 10.0 | 15.0 | - | - | - |
| | | flake 3 (Comparative Example 1 bottle) | - | - | - | - | - | 10.0 | 15.0 | - |
| | | flake 4 (Comparative Example 2 bottle) | - | - | - | - | - | - | - | 10.0 |
| Container composition (mass%) | Polyester resin (A) | | 94.5 | 94.5 | 94.5 | 96.5 | 96.5 | 99.5 | 99.5 | 94.5 |
| | Pigment (B) or Dye | Pigment dispersion | 0.5 | 0.5 | 0.5 | 0.5 | 0.5 | 0.5 | 0.5 | - |
| | | Dye | - | - | - | - | - | - | - | 0.5 |
| | Polyamide resin (C) | MXD6 | 5.0 | 5.0 | 5.0 | 3.0 | 3.0 | - | - | 5.0 |
| | mass ratio | (B)/(C) | 9/91 | 9/91 | 9/91 | 14/86 | 14/86 | - | - | 9191 |

EP 3 984 913 B1

(continued)

| | | | Example 8 | Example 9 | Example 10 | Example 11 | Example 12 | Comparative Example 4 | Comparative Example 5 | Comparative Example 6 |
|---|---|---|---|---|---|---|---|---|---|---|
| Liquid bleaching agent composition (mass%) | sodium hypochlorite | | 6 | 6 | 3 | 6 | 6 | 6 | 6 | 6 |
| Evaluations | Storage test | crack | absent | absent | absent | absent | absent | present | present | absent |
| | Color tone retentiveness | Change in "a" value | 0.5 | 0.5 | 0.3 | 3.2 | 3.1 | 9.2 | 9.1 | 10.8 |
| | | Evaluation in 4 ranks | A | A | A | B | B | D | D | D |

According to the evaluation results of Examples and Comparative Examples, it has been found that also in the case where the recycled resin compositions were used, the bottles of Examples exhibited no generation of cracks also in the storage test, exhibited little change in the color tone also in the color difference measurement, and were excellent in the color tone retentiveness.

**Claims**

1.   Use of a container to accommodate a chlorine-based liquid bleaching agent composition, said container comprising a resin composition comprising a polyester resin (A), a pigment (B) and a polyamide resin (C),

   wherein a content of the polyester resin (A) is 90 to 99 mass%, and
   a mass ratio [(B)/(C)] of the pigment (B) and the polyamide resin (C) is 1/99 to 20/80.

2.   The use of a container according to claim 1, wherein the polyamide resin (C) comprises a constitutional unit derived from diamines comprising 70 mol% or more of a constitutional unit derived from xylylenediamine, and a constitutional unit derived from dicarboxylic acids comprising 70 mol% or more of a constitutional unit derived from an $\alpha,\omega$ -linear aliphatic dicarboxylic acid having 4 to 20 carbon atoms.

3.   The use of a container according to claim 1 or 2, wherein the polyamide resin (C) comprises a constitutional unit derived from diamines comprising 80 mol% or more of a constitutional unit derived from xylylenediamine, and a constitutional unit derived from dicarboxylic acids comprising 80 mol% or more of a constitutional unit derived from adipic acid.

4.   The use of a container according to claim 1, wherein the polyamide resin (C) comprises a constitutional unit derived from $\omega$-aminocarboxylic acids comprising 70 mol% or more of a constitutional unit derived from an $\omega$-amino-linear aliphatic carboxylic acid having 4 to 20 carbon atoms.

5.   The use of a container according to claim 1, wherein the polyamide resin (C) is one or more selected from the group consisting of polyamide MXD6, polyamide MXD10, nylon 6, nylon 66, nylon 1010, nylon 11 and nylon 12.

6.   The use of a container according to any one of claims 1 to 5, wherein a content of the polyamide resin (C) in the resin composition is 1 mass% or higher and 9 mass% or lower.

7.   The use of a container according to any one of claims 1 to 6, wherein the polyester resin (A) comprises a constitutional unit derived from dicarboxylic acids comprising 80 mol% or more of a constitutional unit derived from terephthalic acid, and a constitutional unit derived from diols comprising 80 mol% or more of a constitutional unit derived from ethylene glycol.

8.   The use of a container according to any one of claims 1 to 7, wherein the pigment (B) is a pigment comprising one or more selected from the group consisting of copper, zinc and titanium.

9.   The use of a container according to any one of claims 1 to 8, wherein the container is a single-layer container.

10.   The use of a container according to any one of claims 1 to 9, wherein the resin composition comprises a recycled material, and the recycled material comprises at least one selected from the group consisting of the polyester resin (A), the pigment (B) and the polyamide resin (C).

11.   A bleaching agent article comprising a container having a chlorine-based liquid bleaching agent composition accommodated therein,

   the container comprising a resin composition comprising a polyester resin (A), a pigment (B) and a polyamide resin (C),
   wherein a content of the polyester resin (A) is 90 to 99 mass%, and
   a mass ratio [(B)/(C)] of the pigment (B) and the polyamide resin (C) is 1/99 to 20/80.

12.   The bleaching agent article according to claim 11, wherein the chlorine-based liquid bleaching agent composition comprises 0.5 to 15 mass% of sodium hypochlorite.

**13.** The bleaching agent article according to claim 11 or 12, wherein the chlorine-based liquid bleaching agent composition comprises a surfactant.

**14.** The bleaching agent article according to any one of claims 11 to 13, wherein the chlorine-based liquid bleaching agent composition comprises an alkaline agent.


**Patentansprüche**

**1.** Verwendung eines Behälters zur Aufnahme einer flüssigen Bleichmittelzusammensetzung auf Chlorbasis, wobei der Behälter eine Harzzusammensetzung umfasst, die ein Polyesterharz (A), ein Pigment (B) und ein Polyamidharz (C) umfasst,

wobei ein Gehalt des Polyesterharzes (A) 90 bis 99 Massen-% beträgt und
ein Massenverhältnis [(B)/(C)] des Pigments (B) und des Polyamidharzes (C) 1/99 bis 20/80 beträgt.

**2.** Die Verwendung eines Behälters nach Anspruch 1, wobei das Polyamidharz (C) eine von Diaminen abgeleitete konstituierende Einheit umfasst, die 70 mol-% oder mehr einer von Xylylendiamin abgeleiteten konstituierenden Einheit umfasst, und eine von Dicarbonsäuren abgeleitete konstituierende Einheit umfasst, die 70 mol-% oder mehr einer von einer $\alpha,\omega$-linearen aliphatischen Dicarbonsäure mit 4 bis 20 Kohlenstoffatomen abgeleiteten konstituierenden Einheit umfasst.

**3.** Die Verwendung eines Behälters nach Anspruch 1 oder 2, wobei das Polyamidharz (C) eine von Diaminen abgeleitete konstituierende Einheit umfasst, die 80 mol-% oder mehr einer von Xylylendiamin abgeleiteten konstituierenden Einheit umfasst, und eine von Dicarbonsäuren abgeleitete konstituierende Einheit umfasst, die 80 Mol-% oder mehr einer von Adipinsäure abgeleiteten konstituierenden Einheit umfasst.

**4.** Die Verwendung eines Behälters nach Anspruch 1, wobei das Polyamidharz (C) eine von $\omega$-Aminocarbonsäuren abgeleitete konstituierende Einheit umfasst, die 70 mol-% oder mehr einer von einer $\omega$-amino-linearen aliphatischen Carbonsäure mit 4 bis 20 Kohlenstoffatomen abgeleiteten konstituierenden Einheit umfasst.

**5.** Die Verwendung eines Behälters nach Anspruch 1, wobei das Polyamidharz (C) eines oder mehrere, ausgewählt aus der Gruppe bestehend aus Polyamid MXD6, Polyamid MXD10, Nylon 6, Nylon 66, Nylon 1010, Nylon 11 und Nylon 12, ist.

**6.** Die Verwendung eines Behälters nach einem der Ansprüche 1 bis 5, wobei ein Gehalt des Polyamidharzes (C) in der Harzzusammensetzung 1 Massen-% oder mehr und 9 Massen-% oder weniger beträgt.

**7.** Die Verwendung eines Behälters nach einem der Ansprüche 1 bis 6, wobei das Polyesterharz (A) eine von Dicarbonsäuren abgeleitete konstituierende Einheit umfasst, die 80 mol-% oder mehr einer von Terephthalsäure abgeleiteten konstituierenden Einheit umfasst, und eine von Diolen abgeleitete konstituierende Einheit umfasst, die 80 mol-% oder mehr einer von Ethylenglykol abgeleiteten konstituierenden Einheit umfasst.

**8.** Die Verwendung eines Behälters nach einem der Ansprüche 1 bis 7, wobei das Pigment (B) ein Pigment ist, das eines oder mehrere ausgewählt aus der Gruppe bestehend aus Kupfer, Zink und Titan umfasst.

**9.** Die Verwendung eines Behälters nach einem der Ansprüche 1 bis 8, wobei der Behälter ein einschichtiger Behälter ist.

**10.** Die Verwendung eines Behälters nach einem der Ansprüche 1 bis 9, wobei die Harzzusammensetzung ein recyceltes Material umfasst und das recycelte Material mindestens eines ausgewählt aus der Gruppe bestehend aus dem Polyesterharz (A), dem Pigment (B) und dem Polyamidharz (C) umfasst.

**11.** Ein Bleichmittelartikel, umfassend einen Behälter mit einer darin aufgenommenen flüssigen Bleichmittelzusammensetzung auf Chlorbasis,

wobei der Behälter eine Harzzusammensetzung umfasst, die ein Polyesterharz (A), ein Pigment (B) und ein Polyamidharz (C) umfasst,
wobei ein Gehalt des Polyesterharzes (A) 90 bis 99 Massen-% beträgt und

ein Massenverhältnis [(B)/(C)] des Pigments (B) und des Polyamidharzes (C) 1/99 bis 20/80 beträgt.

12. Der Bleichmittelartikel nach Anspruch 11, wobei die flüssige Bleichmittelzusammensetzung auf Chlorbasis 0,5 bis 15 Massen-% Natriumhypochlorit umfasst.

13. Der Bleichmittelartikel nach Anspruch 11 oder 12, wobei die flüssige Bleichmittelzusammensetzung auf Chlorbasis ein grenzflächenaktives Mittel umfasst.

14. Der Bleichmittelartikel nach einem der Ansprüche 11 bis 13, wobei die flüssige Bleichmittelzusammensetzung auf Chlorbasis ein alkalisches Mittel umfasst.

**Revendications**

1. Utilisation d'un récipient pour recevoir une composition d'agent de blanchiment liquide à base de chlore, ledit récipient comprenant une composition de résine comprenant une résine de polyester (A), un pigment (B) et une résine de polyamide (C),

dans laquelle la teneur en la résine de polyester (A) est de 90 à 99 % en masse, et
le rapport en masse [(B)/(C)] du pigment (B) à la résine de polyamide (C) est de 1/99 à 20/80.

2. Utilisation d'un récipient selon la revendication 1, dans laquelle la résine de polyamide (C) comprend un motif constitutif dérivé de diamines comprenant 70 % en moles ou plus d'un motif constitutif dérivé de xylylènediamine, et un motif constitutif dérivé d'acides dicarboxyliques comprenant 70 % en moles ou plus d'un motif constitutif dérivé d'un acide dicarboxylique aliphatique $\alpha,\omega$-linéaire ayant 4 à 20 atomes de carbone.

3. Utilisation d'un récipient selon la revendication 1 ou 2, dans laquelle la résine de polyamide (C) comprend un motif constitutif dérivé de diamines comprenant 80 % en moles ou plus d'un motif constitutif dérivé de xylylènediamine, et un motif constitutif dérivé d'acides dicarboxyliques comprenant 80 % en moles ou plus d'un motif constitutif dérivé d'acide adipique.

4. Utilisation d'un récipient selon la revendication 1, dans laquelle la résine de polyamide (C) comprend un motif constitutif dérivé d'acides $\omega$-aminocarboxyliques comprenant 70 % en moles ou plus d'un motif constitutif dérivé d'un acide $\omega$-aminocarboxylique aliphatique linéaire ayant 4 à 20 atomes de carbone.

5. Utilisation d'un récipient selon la revendication 1, dans laquelle la résine de polyamide (C) est un ou plusieurs choisis dans le groupe constitué par le polyamide MXD6, le polyamide MXD10, le nylon 6, le nylon 66, le nylon 1010, le nylon 11 et le nylon 12.

6. Utilisation d'un récipient selon l'une quelconque des revendications 1 à 5, dans laquelle la teneur en la résine de polyamide (C) dans la composition de résine est de 1 % en masse ou plus et 9 % en masse ou moins.

7. Utilisation d'un récipient selon l'une quelconque des revendications 1 à 6, dans laquelle la résine de polyester (A) comprend un motif constitutif dérivé d'acides dicarboxyliques comprenant 80 % en moles ou plus d'un motif constitutif dérivé d'acide téréphtalique, et un motif constitutif dérivé de diols comprenant 80 % en moles ou plus d'un motif constitutif dérivé d'éthylène glycol.

8. Utilisation d'un récipient selon l'une quelconque des revendications 1 à 7, dans laquelle le pigment (B) est un pigment comprenant un ou plusieurs choisis dans le groupe constitué par le cuivre, le zinc et le titane.

9. Utilisation d'un récipient selon l'une quelconque des revendications 1 à 8, dans laquelle le récipient est un récipient monocouche.

10. Utilisation d'un récipient selon l'une quelconque des revendications 1 à 9, dans laquelle la composition de résine comprend un matériau recyclé, et le matériau recyclé comprend au moins l'un choisi dans le groupe constitué par la résine de polyester (A), le pigment (B) et la résine de polyamide (C).

11. Article de type agent de blanchiment comprenant un récipient ayant une composition d'agent de blanchiment liquide à base de chlore placée dans celui-ci,

le récipient comprenant une composition de résine comprenant une résine de polyester (A), un pigment (B) et une résine de polyamide (C),
dans lequel la teneur en la résine de polyester (A) est de 90 à 99 % en masse, et
le rapport en masse [(B)/(C)] du pigment (B) à la résine de polyamide (C) est de 1/99 à 20/80.

12. Article de type agent de blanchiment selon la revendication 11, dans lequel la composition d'agent de blanchiment liquide à base de chlore comprend 0,5 à 15 % en masse d'hypochlorite de sodium.

13. Article de type agent de blanchiment selon la revendication 11 ou 12, dans lequel la composition de blanchiment liquide à base de chlore comprend un tensioactif.

14. Article de type agent de blanchiment selon l'une quelconque des revendications 11 à 13, dans lequel la composition d'agent de blanchiment liquide à base de chlore comprend un agent alcalin.

**EP 3 984 913 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003341748 A
- JP H10310705 B
- WO 2017150109 A